# EUROPÄISCHE PATENTSCHRIFT

(11) **EP 0 903 025 B1**
(45) Veröffentlichungstag und Bekanntmachung des Hinweises auf die Patenterteilung: **21.07.2004**
(21) Anmeldenummer: 97926961.0
(22) Anmeldetag: 07.05.1997
(51) Int. Cl.: H04L 1/18

(54) **VERFAHREN ZUR RECHNERGESTÜTZTEN RÜCKSIGNALISIERUNG IN EINEM AUTOMATISCHEN WIEDERHOLUNGS-ANFORDERUNGS-VERFAHREN**
PROCESS FOR COMPUTER-AIDED RESIGNALLING IN AN AUTOMATIC REPEAT REQUEST
PROCEDE DE RETROSIGNALISATION ASSISTE PAR ORDINATEUR DANS UN PROCEDE DE DEMANDE DE REPETITION AUTOMATIQUE

(30) Priorität: 31.05.1996 DE 19621995
(43) Veröffentlichungstag der Anmeldung: 24.03.1999
(73) Patentinhaber: SIEMENS AKTIENGESELLSCHAFT, 80333 München (DE)
(72) Erfinder: SEYTTER, Fritz, D-81667 München (DE); WIMMER, Bernhard, D-81825 München (DE)
(86) Internationale Anmeldenummer: PCT/DE1997/000924
(87) Internationale Veröffentlichungsnummer: WO 1997/047104

(56) Entgegenhaltungen:
- IEEE TRANSACTIONS ON COMMUNICATIONS, Bd. 36, Nr. 4, April 1988, Seiten 389-400, XP000670428 HAGENAUER J: "RATE-COMPATIBLE PUNCTURED CONVOLUTIONAL CODES (RCPC CODES) AND THEIR APPLICATIONS" in der Anmeldung erwähnt
- 1996 IEEE 46TH. VEHICULAR TECHNOLOGY CONFERENCE, MOBILE TECHNOLOGY FOR THE HUMAN RACE ATLANTA, APR. 28 - MAY 1, 1996, Bd. 1, 28.April 1996, INSTITUTE OF ELECTRICAL AND ELECTRONICS ENGINEERS, Seiten 277-281, XP000594298 GAGNAIRE M ET AL: "AN INTELLIGENT HYBRID TYPE-II ARQ/FEC LOGICAL LINK CONTROL PROTOCOL FOR GSM MOBILE COMMUNICATION SYSTEM"

## Beschreibung

Bei einem sog. automatischen Wiederholungs-Anforderungs-Verfahren Typ II (Automatic Repeat Request Type II, ARQ-II-Verfahren) werden Nachrichten zwischen zwei Computereinheiten ausgetauscht. Dabei wird ein zu übertragendes Informationswort unter Verwendung eines Lochungscodes codiert. Unter einem Informationswort ist in diesem Zusammenhang eine Bitfolge beliebiger Länge zu verstehen, die die eigentlich zu übertragende Information enthält.

Die Druckschrift 1996 IEEE 46TH. VEHICULAR TECHNOLOGY CONFERENCE, MOBILE TECHNOLOGY FOR THE HUMAN RACE ATLANTA, APR. 28 - MAY 1, 1996, Bd. 1, 28.April 1996, INSTITUTE OF ELECTRICAL AND ELECTRONICS ENGINEERS, Seiten 277-281, XP000594298 GAGNAIRE M ET AL: "AN INTELLIGENT HYBRID TYPE-II ARQ/FEC LOGICAL LINK CONTROL PROTOCOL FOR GSM MOBILE COMMUNICATION SYSTEM" offenbart ein solches ARQ II Verfahren.

Verschiedene Varianten von Lochungscodes sind bekannt, beispielsweise der sog. Lochungsfaltungscode, der in dem Dokument [1] beschrieben ist. In dem Dokument [1] ist ferner das automatische Wiederholungs-Anforderungs-Verfahren Typ II beschrieben.

Weitere für ARQ-II geeignete Codes sind beispielsweise aus dem Dokument [2] bekannt. Auch für diese Art von Lochungscodes kann das automatische Wiederholungs-Anforderungs-Verfahren Typ II eingesetzt werden.

Bei der Codierung werden für das Informationswort in einer für den jeweiligen Lochungscode charakteristischen Weise Nachrichten gebildet, die zum einen die Information des Informationswortes enthalten und zum anderen Redundanzinformation zur Fehlerkorrektur aufweisen, abhängig von dem verwendeten Lochungscode.

Die Nachrichten werden bei dem ARQ-Verfahren in einer Weise übertragen, daß zu Beginn eine erste Nachricht von einer ersten Computereinheit zu einer zweiten Computereinheit übertragen wird. Die erste Nachricht enthält mindestens die Information des Informationswortes und Information zur Fehlererkennung. Wird in der zweiten Computereinheit bei der Decodierung der ersten Nachricht ein Fehler erkannt, so wird eine zweite Nachricht von der ersten Computereinheit mit einer Rücksignalisierungsnachricht angefordert, die Redundanzinformation zur Fehlerkorrektur des ersten Nachricht enthält. Die zweite Nachricht wird ebenso bei der Bildung der Nachrichten codiert. Die zweite Nachricht wird zu der zweiten Computereinheit übertragen. In der zweiten Computereinheit wird die zweite Nachricht zusammen mit der ersten Nachricht decodiert. Die erste Nachricht muß in der zweiten Computereinheit zu diesem Zweck in codierter Form zwischengespeichert werden. Werden die erste Nachricht und die zweite Nachricht zusammen decodiert, so ist eine Fehlerkorrektur durch die in der zweiten Nachricht zu der ersten Nachricht enthaltene Redundanzinformation mit nunmehr einer erhöhten Wahrscheinlichkeit möglich. Ist eine fehlerfrei Decodierung noch immer nicht möglich, so wird weitere Redundanz in Form weiterer Nachrichten von der ersten Computereinheit angefordert. Nach Übertragung einer dritten Nachricht, die weitere Redundanzinformation zu der ersten Nachricht aufweist, zu der zweiten Computereinheit, wird in der dritten Computereinheit die dritte Nachricht zusammen mit der ersten Nachricht und der zweiten Nachricht decodiert. Dieses Prinzip kann solange mit weiteren Nachrichten, die weitere Redundanzinformation zu der ersten Nachricht enthalten,fortgesetzt werden, bis eine fehlerfreie Decodierung in der zweiten Computereinheit möglich ist. Diese Vorgehensweise ist in dem Dokument [1] beschrieben.

In der Rücksignalisierungsnachricht, mit der eine weitere Nachricht und damit weitere Redundanzinformation angefordert wird, ist es notwendig, daß angegeben ist, welche weitere Nachricht angefordert wird, d. h. es muß aus der Rücksignalisierungsnachricht für die erste Computereinheit ersichtlich sein, ob die zweite Nachricht, die dritte Nachricht, etc. übertragen werden soll. Die Angabe zur Identifikation der weiteren Nachricht ist ferner von erheblicher Bedeutung, da es zur korrekten Decodierung der zusammengesetzten Nachricht, die sich beispielsweise aus der ersten Nachricht und der zweiten Nachricht ergibt, nötig ist, zu wissen, welche Nachrichten zusammengefaßt werden. Diesen Zweck erfüllt das Identifizierungsbit in der Rücksignalisierungsnachricht, dessen Funktion auch als ein Zähler aufgefaßt werden kann.

Somit liegt der Erfindung das Problem zugrunde, ein ARQ-Verfahren anzugeben, bei dem aus der Rücksignalisierungsnachricht eindeutig eine angeforderte weitere Nachricht, die Redundanzinformation zur Fehlerkorrektur der ersten Nachricht enthält, identifiziert wird.

Das Problem wird durch das Verfahren gemäß Patentanspruch 1 gelöst.

Bei dem Verfahren gemöß Patentanspruch 1 wird das ARQ-Verfahren mit einer Rücksignalisierungsnachricht durchgeführt, die genau ein Bit zur Identifizierung der angeforderten weiteren Nachricht enthält, mit der Redundanzinformation zu der ersten Nachricht zu der zweiten Computereinheit übertragen wird, um somit eine Fehlerkorrektur, d. h. eine fehlerfreie Decodierung der ersten Nachricht zusammen mit der weiteren übertragenen Nachricht zu ermöglichen.

Durch die Angabe der angeforderten Nachricht in genau einem Bit ist eine sehr einfache Möglichkeit geschaffen, die angeforderte Nachricht in der ersten Computereinheit zu identifizieren.

Ferner wird durch Verwendung lediglich eines Bits zur Identifizierung der angeforderten Nachricht die zur Übertragung der Rücksignalisierungsnachricht benötigte Übertragungskapazität bezüglich der Anforderung einer weiteren Nachricht minimiert.

Auch wird die Auswertung der Rücksignalisierungsnachricht in der ersten Computereinheit sehr einfach gehalten, da lediglich ein Bit ausgewertet werden muß, um die Information zu erhalten, welche Nachricht an die zweite Computereinheit übertragen werden soll. Damit wird die zur Auswertung durch einen Rechner benötigte Rechenkapazität sehr gering gehalten, da keine komplizierten Auswerteverfahren durchgeführt werden müssen.

Vorteilhafte Weiterbildungen ergeben sich aus den abhängigen Ansprüchen.

Ein Ausführungsbeispiel der Erfindung ist in den Figuren dargestellt und wird im weiteren näher erläutert.

Es zeigen
- Fig. 1: eine Skizze, in der in Form eines Nachrichtenflußdiagramms der Verlauf eines typischen automatischen Wiederholungsanforderungsverfahren dargestellt ist;
- Fig. 2: eine Skizze, in der ein möglicher Aufbau der Rücksignalisierungsnachricht dargestellt ist;
- Fig. 3a bis 3b: Nachrichtenflußdiagramme, in denen verschiedene Fehlerfälle in dem ARQ-Verfahren beschrieben sind.

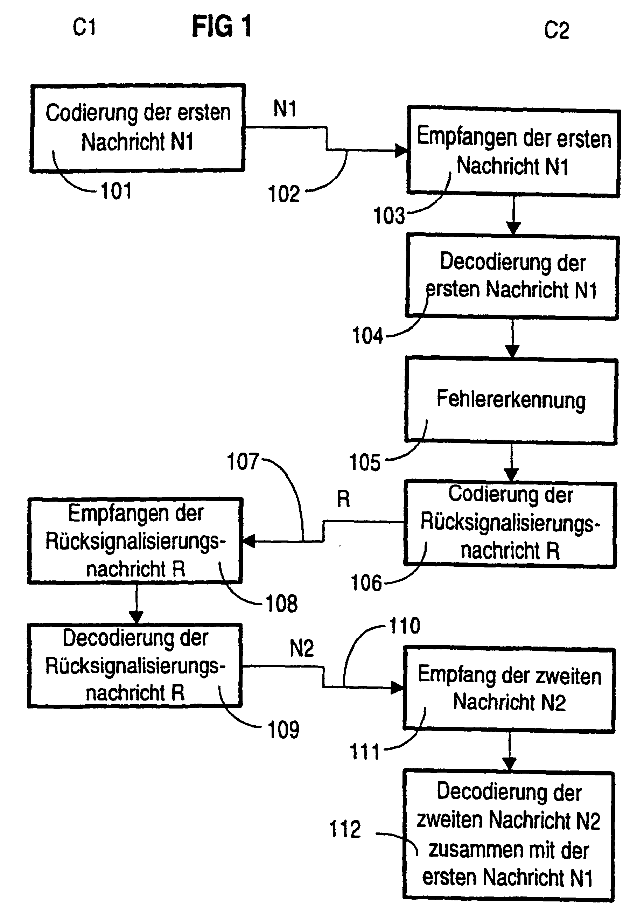

In Fig. 1 ist in Form eines Nachrichtenflußdiagramms das beispielsweise in dem Dokument [1] beschriebene automatische Wiederholungs-Anforderungs-Verfahren (Automatic Repeat Request Type II, ARQ-II-Verfahren) des sog. Typs II dargestellt.

Bei dem ARQ-II-Verfahren werden Nachrichten zwischen zwei Computereinheiten ausgetauscht. Dabei wird ein zu übertragendes Informationswort I unter Verwendung eines Lochungscodes in einer ersten Computereinheit C1 codiert 101. Ferner kann zusätzlich zu dem Informationswort I eine Bitfolge CRC zur Fehlererkennung, beispielsweise mittels eines CRC-Verfahrens (Cyclic Redundacy Check), und/oder mit einer vorgegebenen Anzahl von Tailbits T, deren Anzahl dem Grad eines zur Codierung verwendeten rückgekoppelten Schiebregisters entspricht. Die Tailbits dienen in ihrer eigentlichen Funktion dazu, das rückgekoppelte Schiebregister in einen definierten EndZustand zu bringen, beispielsweise in einen Zustand, in dem alle Register des rückgekoppelten Schiebregisters den Wert 0 aufweisen.

Das Informationswort I wird codiert 101, beispielsweise unter Verwendung eines Lochungsfaltungscodes oder eines Codes, der beispielsweise in dem Dokument [2] beschrieben ist. Dies führt zu einem Zwischenwort ZW, welches in einem weiteren Schritt "gelocht" wird. Unter einer Lochung ist ein von einem verwendeten Lochungscode abhängige, durch den Lochungscode vorgegebene Auswahl von Bits des Zwischenworts ZW und die Aufteilung des Zwischenwortes ZW in zu übertragene Nachrichten. Dabei wird eine erste Nachricht N1 gebildet, die mindestens das Informationswort I und Information enthält, die zu einer Fehlererkennung von Übertragungsfehlern bei der Decodierung der ersten Nachricht N1 in einer zweiten Computereinheit C2 verwendet wird. Ferner werden weitere Nachrichten Ni aus dem Zwischenwort ZW gebildet und in der ersten Computereinheit C1 abgespeichert. Mit einem Index i wird die jeweilige weitere Nachricht Ni eindeutig indiziert. Der Index i ist eine beliebige natürliche Zahl. Mit dem Index i mit dem Wert 2 wird beispielsweise eine zweite Nachricht N2, mit dem Index i mit dem Wert 3 eine dritte Nachricht N3 bezeichnet. Die weiteren Nachrichten Ni enthalten jeweils Redundanzinformation zu der ersten Nachricht N1 bzw. zu weiteren Nachrichten Ni, die zusammen mit den bisher übertragenen Nachrichten N1 bis Ni-1 in der zweiten Computereinheit C2 zur fehlerkorrigierenden Decodierung des Informationswortes I verwendet wird. Unter fehlerkorrigierende Decodierung ist in diesem Zusammenhang folgende Vorgehensweise nach der Übertragung der weiteren Nachrichten Ni zu der zweiten Computereinheit C2 zu verstehen.

Es wird üblicherweise jeweils eine weitere Nachricht Ni zu der zweiten Computereinheit C2 übertragen, wobei die weitere Nachricht Ni zusammen mit nicht decodierten, in der zweiten Computereinheit C2 zwischengespeicherten, zuvor empfangenen Nachrichten decodiert wird.

Nach Übertragung der ersten Nachricht N1 von der ersten Computereinheit C1 zu der zweiten Computereinheit C2 102, wird die erste Nachricht N1 in der zweiten Computereinheit C2 empfangen 103, decodiert 104, und ein Fehlererkennungsverfahren, beispielsweise anhand der zusätzlichen Bitfolge CRC und/oder anhand der Tailbits T, wird auf die decodierte erste Nachricht N1 angewendet 105.

Wurde die erste Nachricht N1 fehlerfrei übertragen, so kann das durch die Decodierung erhaltene Informationswort I in der zweiten Computereinheit verarbeitet werden.

Wird jedoch ein Fehler erkannt, beispielsweise ein Ubertragungsfehler, der anhand eines optional zusätzlich vorgesehenen Fehlerkorrekturverfahrens nicht behoben werden kann, so wird bei den Lochungscodes eine Redundanzinformation zu der ersten Nachricht N1 benötigt. Die benötigte Redundandanzinformation ist in den weiteren Nachrichten Ni enthalten. Um diese Redundanzinformation zu erlangen, wird eine Rücksignalisierungsnachricht R in der zweiten Computereinheit C2 codiert 106 und an die erste Computereinheit C1 übertragen 107. Mit der Rücksignalisierungsnachricht R wird eine weitere Nachricht Ni angefordert.

Die Rücksignalisierungsnachricht R wird von der ersten Computereinheit C1 empfangen 108, decodiert 109 und ausgewertet.

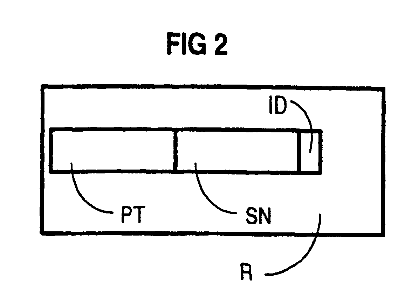

Ein möglicher Aufbau der Rücksignalisierungsnachricht R ist in Figur 2 dargestellt. die Rücksignalisierungsnachricht R weist mindestens folgende Information auf:
- ein Rückwärtsinformationsfeld PT, in dem angegeben ist, ob mit der Rücksignalisierungsnachricht R überhaupt Zusatzinformation angefordert wurde; das Rückwärtsinformationsfeld PT kann beispielsweise mit einem Bit realisiert sein, wobei mit einem ersten Bitwert angezeigt wird, daß eine weitere Nachricht Ni angefordert wird;
- ein Sequenznummernfeld SN, das einen Zähler enthält, beispielsweise der Breite von 5 Bit, um einen Zahlenbereich von 0 bis 31 abzudecken; mit dem Sequenznummernfeld SN wird die Zugehörigkeit der Rücksignalisierungsnachricht R zu einem bestimmten Informationswort I eindeutig gekennzeichnet;
- ein Anforderungsfeld ID mit einer Angabe der angeforderten weiteren Nachricht; dieses Feld der Rücksignalisierungsnachricht R weist erfindungsgemäß die Länge von genau einem Bit auf.

Zusätzliche Informationsfelder können in der Rücksignalisierungsnachricht R protokollspezifisch selbstverständlich vorhanden sein. Auch ist es in einer Variante vorgesehen, daß die Rücksignalisierungsnachricht R kein Rückwärtsinformationsfeld PT aufweist.

Wird aufgrund eines aufgetretenen Fehlers bei der Übertragung der ersten Nachricht N1 die zweite Nachricht mit der Rücksignalisierungsnachricht R angefordert, so weist das Feld der Angabe der angeforderten weiteren Nachricht ID einen ersten Wert auf.

Wird nach Senden der ersten Nachricht N1 von der ersten Computereinheit C1 eine Rücksignalisierungsnachricht R von der zweiten Computereinheit C2 empfangen, und weist das Anforderungsfeld ID den ersten Wert auf, so ist für die erste Computereinheit C1 erkennbar, daß die zweite Nachricht N2 angefordert wird.

Aufgrund der Rücksignalisierungsnachricht R mit dem Anforderungsfeld mit dem ersten Wert wird die zweite Nachricht N2 mit zusätzlicher Redundanzinformation zu der ersten Nachricht N1 von der ersten Computereinheit C1 zu der zweiten Computereinheit C2 übertragen 110.

In der zweiten Computereinheit C2 wird die zweite Nachricht N2 empfangen 111 und gespeichert. Die codierte erste Nachricht N1, die in codierter Form in der zweiten Computereinheit C2 gespeichert wurde, wird zusammen mit der zweiten Nachricht N2 decodiert 112. Auf die daraus gebildete decodierte Nachricht wird wiederum ein Fehlererkennungsverfahren angewendet.

Wird wiederum ein Fehler erkannt, wird eine weitere Rücksignalisierungsnachricht R codiert und zu der ersten Computereinheit C1 übertragen. In dieser Rücksignalisierungsnachricht R wird die dritte Nachricht N3 angefordert, was durch einen zweiten Wert des Anforderungsfeldes ID angegeben wird. Die Rücksignalisierungsnachricht R wird in der ersten Computereinheit C1 empfangen und das Anforderungsfeld ID wird ausgewertet. Durch den zweiten Wert in dem Anforderungsfeld ID wird in der ersten Computereinheit C1 erkannt, daß die dritte Nachricht N3 angefordert wird. Aufgrund dieses Werts in dem Anforderungsfeld ID wird die dritte Nachricht N3 zu der zweiten Computereinheit C2 übertragen.

Nach Empfang der dritten Nachricht N3 in der zweiten Computereinheit C2 werden die codierte erste Nachricht N1, die codierte zweite Nachricht N2 und die dritte Nachricht N3 zusammen decodiert. Auf die daraus gebildete decodierte Nachricht wird wiederum ein Fehlererkennungsverfahren angewendet.

Wird ein Fehler erkannt, wird eine weitere Rücksignalisierungsnachricht R codiert und zu der ersten Computereinheit C1 übertragen. In dieser Rücksignalisierungsnachricht R wird eine vierte Nachricht N4 angefordert, was durch den ersten Wert des Anforderungsfeldes ID angegeben wird.

Diese Vorgehensweise kann iterativ solange wiederholt werden, bis eine fehlerfrei Decodierung der empfangenen Nachrichten in der zweiten Computereinheit C2 möglich ist. Bei jedem Iterationsschritt wird jeweils eine weitere Nachricht Ni angefordert, die jeweils durch ein mit jedem Iterationsschritt jeweils den Wert wechselndes Anforderungsfeld ID gekennzeichnet wird.

Ist die Decodierung der zusammengefaßten Nachrichten fehlerfrei möglich, wofür die Wahrscheinlichkeit größer wird mit größerer Menge zusätzlicher Redundanzinformation, also mit einer größerer Anzahl weiterer Nachrichten Ni, so enthält die fehlerfrei decodierte Nachricht das Informationswort I, das nunmehr verarbeitet wird.

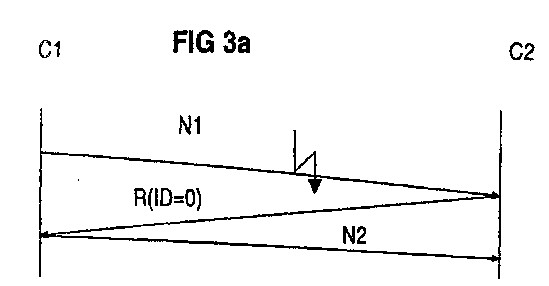

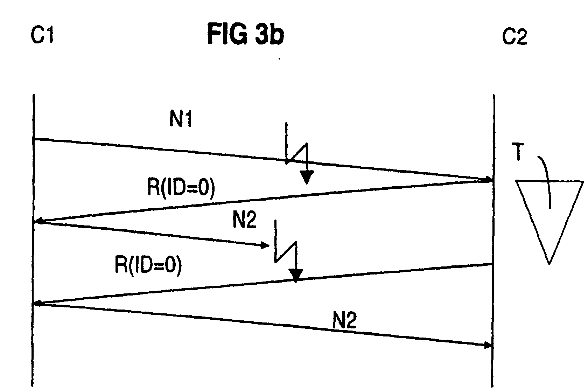

In den Figuren 3a und 3b sind zwei mögliche Verfahrensverläufe skizziert.

Durch ein Blitzsymbol 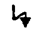 in den jeweiligen Übertragungspfeilen der einzelnen Nachrichten wird das Auftreten eines Fehlers bei der Übertragung der entsprechenden Nachricht symbolisiert.

In Fig. 3a tritt bei der Übertragung der ersten Nachricht N1 ein Fehler auf. Dies wird in der zweiten Computereinheit C2 erkannt und es wird die Rücksignalisierungsnachricht R an die erste Computernachricht C1 übertragen. Das Anforderungsfeld ID der Rücksignalisierungsnachricht R weist den ersten Wert, beispielsweils den Wert 0 auf. Daraufhin wird die zweite Nachricht N2 zu der zweiten Computereinheit C2 übertragen.

In Fig. 3b treten sowohl bei der ersten Nachricht N1 als auch bei der Übertragung der zweiten Nachricht N2 Übertragungsfehler auf. Dabei wird mit einer Rücksignalisierungsnachricht R mit dem ersten Wert in dem Anforderungsfeld ID die zweite Nachricht N2 angefordert. Die Übertragung der zweiten Nachricht N2 ist in diesem, in Figur 3b dargestellten Fall so stark gestört, daß die zweite Nachricht N2 nicht bei der zweiten Computereinheit C2 ankommt.

Nach Ablauf eines Zeitzählers T wird in der zweiten Computereinheit C2 entschieden, die angeforderte, aber nicht erhaltene Nachricht N2 ein weiteres Mal anzufordern.

Dazu sendet sie eine weitere Rücksignalisierungsnachricht R, nochmals mit dem ersten Wert in dem Anforderungsfeld ID. Die erste Computereinheit C1 wird nach Empfang dieser Nachricht ein weiteres Mal die Nachricht N2 senden.

Dieses Beispiel verdeutlicht die Notewendigkeit des Zählers in dem Anforderungsfeld ID. Würde nämlich von der ersten Computereinheit C1 auf Anforderung auf jeden Fall die dritte Nachricht N3 gesendet, so könnte die dritte Nachricht N3 in der zweiten Computereinheit C2 nicht richtig zugeordnet werdenund eine Decodierung wäre nicht möglich.

Es genügt jedoch genau ein Bit in dem Anforderungsfeld ID zur eindeutigen Identifizierung der jeweils angeforderten Nachricht, da in der ersten Computereinheit C1 nur bekannt gemacht werden muß, ob die jeweils bereits gesendete Nachricht wiederholt werden muß oder ob die nächste anstehende Nahcricht gesendet werden soll.

In diesem Dokument wurden folgende Veröffentlichungen zitiert:
[1] J. Hagenauer, IEEE Transactions on Communications, Vol. 36, No. 4, Rate-Compatible Punctured Convolutional Codes (RCPC-Codes) and their Applications, S. 389 bis 400, April 1988
[2] J. Serrat-Fernández und J. Dalmau-Royo, Hybrid-ARQ System for HF-Channels Based on Codeword Partitioning, IEE Proc. Commun., Vol. 143, Nr. 2, S. 73 - 77, April 1996

## Patentansprüche

1. Verfahren zur rechnergestützten Rücksignalisierung in einem automatischen Wiederholungs-Anforderungs-Verfahren (Automatic Repeat Request, ARQ),
- bei dem in einer ersten Computereinheit (C1) ein Informationswort, welches eine beliebige Anzahl von Bits aufweist, unter Verwendung eines Lochungscodes in mindestens eine erste Nachricht (N1) und weitere Nachrichten (Ni, i=2..n) codiert wird (101), ,
- bei dem in der ersten Computereinheit (C1) die erste Nachricht (N1) an eine zweite Computereinheit (C2) übertragen wird (102),
- bei dem in der zweiten Computereinheit (C2) die erste Nachricht (N1) empfangen wird (103),
- bei dem in der zweiten Computereinheit (C2) die erste Nachricht decodiert wird (104),
- bei dem in der zweiten Computereinheit (C2) überprüft wird, ob die erste Nachricht (N1) fehlerfrei übertragen wurde (105),
- bei dem für den Fall, daß die erste Nachricht nicht fehlerfrei übertragen wurde, mindestens eine Rücksignalisierungsnachricht (R) an die erste Computereinheit (C1) codiert (106) und übertragen wird (107), wobei die Rücksignalisierungsnachricht (R) genau ein Anforderungsfeld (ID) der Länge genau eines Bits aufweist, mit dem eine zweite Nachricht (N2) identifiziert wird,
- bei dem in der ersten Computereinheit (C1) die Rücksignalisierungsnachricht (R) empfangen (108) und decodiert (109) wird,
- bei dem die angeforderte zweite Nachricht (N2), in der eine Zusatzinformation zu der ersten Nachricht (N1) zur Fehlerkorrektur zusammen mit der ersten Nachricht (N1) in der zweiten Computereinheit (C2) enthalten ist an die zweite Computereinheit (C2) übertragen wird (110), und
- bei dem die zweite Nachricht (N2) in der zweiten Computereinheit (C2) empfangen (111) und zusammen mit der ersten Nachricht (N1) decodiert wird (112).

2. Verfahren nach Anspruch 1,
bei dem der Lochungscode ein Lochungsfaltungscode (RCPC) ist.

3. Verfahren nach Anspruch 1 oder 2,
bei dem weitere Nachrichten (Ni) mit weiteren Rücksignalisierungsnachrichten (R) angefordert werden und von der ersten Computereinheit (C1) zu der zweiten Computereinheit (C2) übertragen werden und in der zweiten Computereinheit (C2) zusammen mit zuvor empfangenen, codierten Nachrichten (Ni) decodiert werden.

## Claims

1. Method for computer-aided back signalling in an automatic repeat request (ARQ) procedure,
- in which an information word, which has an arbitrary number of bits, is coded (101) in a first computer unit (C1) into at least a first message (N1) and further messages (Ni, i=2..n) by using a perforation code,
- in which the first message (N1) is transmitted (102) in the first computer unit (C1) to a second computer unit (C2),
- in which the first message (N1) is received (103) in the second computer unit (C2),
- in which the first message is decoded (104) in the second computer unit (C2),
- in which it is checked in the second computer unit (C2) whether the first message (N1) was transmitted (105) without errors,
- in which for the case in which the first message was not transmitted without errors, at least one back-signalling message (R) to the first computer unit (C1) is coded (106) and transmitted (107), the back-signalling message (R) having at least one request field (ID) with a length of exactly one bit by means of which a second message (N2) is identified,
- in which the back-signalling message (R) is received (108) and decoded (109) in the first computer unit (C1),
- in which the requested second message (N2), which contains an additional item of information relating to the first message (N1) for the purpose of error correction together with the first message (N1) in the second computer unit (C2), is transmitted (110) to the second computer unit (C2), and
- in which the second message (N2) is received (111) in the second computer unit (C2) and decoded (112) together with the first message (N1).

2. Method according to Claim 1, **characterized in that** the perforation code is a perforation convolutional code (RCPC).

3. Method according to Claim 1 or 2, in which further messages (Ni) are requested by means of further back-signalling messages (R) and are transmitted from the first computer unit (C1) to the second computer unit (C2) and are decoded in the second computer unit (C2) together with previously received, coded messages (Ni).

## Revendications

1. Procédé pour la rétrosignalisation assistée par ordinateur dans un procédé de demande de répétition automatique (Automatic Repeat Request, ARQ),
- dans lequel, sur une première unité d'ordinateur (C1), un mot d'information, qui présente un nombre quelconque de bits, est codé (101) en utilisant un code discontinu en au moins un premier message (N1) et d'autres message (Ni, i = 2..n),
- dans lequel, sur la première unité d'ordinateur (C1), le premier message (N1) est transmis (102) à une seconde unité d'ordinateur (C2),
- dans lequel le premier message (N1) est réceptionné (103) sur la seconde unité d'ordinateur (C2)
- dans lequel le premier message est décodé (104) sur la seconde unité d'ordinateur (C2),
- dans lequel est vérifié (105) sur la seconde unité d'ordinateur (C2) si le premier message (N1) a été transmis sans erreur,
- dans lequel, pour le cas où le premier message n'a pas été transmis sans erreur, au moins un message de rétrosignalisation (R) est codé (106) et transmis (107) à la première unité d'ordinateur (C1), le message de rétrosignalisation (R) présentant exactement un champ de demande (ID) de la longueur d'exactement un bit, avec lequel un second message (N2) est identifié,
- dans lequel le message de rétrosignalisation (R) est réceptionné (108) et décodé (109) sur la première unité d'ordinateur (C1),
- dans lequel le second message (N2) demandé, dans lequel est incluse une information supplémentaire pour le premier message (N1) pour la correction d'erreurs conjointement avec le premier message (N1) sur la seconde unité d'ordinateur (C2), est transmise (110) à la seconde unité d'ordinateur (C2), et
- dans lequel le second message (N2) est reçu (111) sur la seconde unité d'ordinateur (C2) et décodé (112) conjointement avec le premier message (N1).

2. Procédé selon la revendication 1,
dans lequel le code discontinu est un code discontinu de convolution (RCPC).

3. Procédé selon la revendication 1 ou 2,
dans lequel d'autres messages (Ni) sont demandés avec d'autres messages de rétrosignalisation (R) et sont transmis de la première unité d'ordinateur (C1) à la seconde unité d'ordinateur (C2) et sont décodés sur la seconde unité d'ordinateur (C2) conjointement avec des messages (Ni) codés, réceptionnés auparavant.
